# EUROPEAN PATENT APPLICATION

(11) **EP 1 149 736 A2**
(43) Date of publication of application: **31.10.2001**
(21) Application number: 01303882.3
(22) Date of filing: 27.04.2001
(51) Int. Cl.: B60R 11/02

(54) **Vehicle mounted office system**

(30) Priority: 29.04.2000 GB 0010405
(71) Applicant: Yearwood, Clebert O'Bryan Ricardo, Luton, Bedforshire LU2 7TA (GB); Fradley, Matthew Keith, Wolverhampton WV4 6HJ (GB)
(72) Inventor: Yearwood, Clebert O'Bryan Ricardo, Luton, Bedforshire LU2 7TA (GB); Fradley, Matthew Keith, Wolverhampton WV4 6HJ (GB)
(74) Representative: Gregory, Timothy Mark

(57) **Abstract**

The system comprises a portable computer 1 and means 2 to secure it detachably to the vehicle. A wireless telephone 9 is provided to allow communication. A screen 5 is adapted to communicate information to occupants of the vehicle from either the computer or the telephone. The system is connected so as to enable supply of electrical power from the existing electrical system of the vehicle.

## Description

This invention relates to the field of information management systems. More particularly, but not exclusively, it relates to systems for the management of conventional business office functions when away from base.

The advent of the portable computer has freed many workers from dependence on the facilities available in a conventional office. The user is able to input, store, handle and display data in a manner effectively identical to that which he or she would adopt using a conventional personal computer at a desk. For example, word-processing, spreadsheet and database software programs are available that make no distinction between portable and desktop computers.

It is also possible for computers to communicate with the outside world by means of a modem connection to a conventional telephone system, allowing the use of electronic mail, fax, telephony and all the benefits of the Internet.

The mobile telephone has been another development which has released workers from a fixed office. With the advent of digital mobile telephone systems, which provide sufficiently accurate data transmission, and the development of suitable modems to connect the mobile telephone with the portable computer, the majority of office functions can be carried out wherever the worker happens to be. Such functions may include telephony, computing, route finding, diary software, electronic mail and facsimile transmission.

However, such arrangements are by no means perfect. The portable computer and the mobile phone are conventionally connected by means of a cable, making the combination much more awkward to handle, physically, and sacrificing many of the advantages of "portability".

Furthermore, the use of portable computers and mobile telephones in vehicles, particularly motor cars, may be very awkward or difficult, and may even be highly dangerous. However, for many workers who spend much of their time in motor vehicles, for example, travelling between customers, there is a requirement to be able to access many functions of the portable computer at a time when they would be of most benefit, i.e. when travelling.

It is an object of the present invention to provide a system, integrating the functions of a portable computer and a mobile telephone, which overcomes or alleviates the above disadvantages, and furthermore provides additional benefits from the coupling of such functions with existing systems of a motor vehicle.

According to a first aspect of the present invention, there is provided a vehicle-mounted information management system, comprising a portable computing means adapted to direct the operation of the system, wireless telephony means, display means adapted to communicate information to occupants of the vehicle, means to input commands to the system, means to secure said computing means detachably to the vehicle at a location therein remote from the occupants of the vehicle and connection means to enable supply of electrical power from the existing electrical system of the vehicle.

Preferably, the portable computing means is a conventional portable, "lap-top" or "notebook" computer.

The means to secure the portable computing means to the vehicle, is then advantageously a "docking station", as is well known for connecting portable computers to fixed office computer networks, but physically adapted to fit into and be attached to a motor vehicle.

Optionally, the docking station is located in the boot (or trunk) of the vehicle for concealment against theft.

Alternatively, it may be fitted in the main passenger compartment for convenience of access.

In a further preferred embodiment of the invention, the display means adapted to communicate information with occupants of the vehicle comprises a display screen, advantageously mounted in or near the centre of the front fascia of the vehicle. Advantageously, this screen will be a TFT or a LCD (Liquid Crystal Display) screen, giving benefits in low power requirements and relatively low thickness, relative to a conventional CRT visual display unit.

Additionally, said display means may comprise audible messages, optionally transmitted over a conventional audio speaker system fitted to the vehicle.

Alternatively or additionally, said display means may comprise a "head up display", wherein selected data are projected onto the inside of the vehicle's windscreen, enabling the occupant to view the reflection of the data without looking away from his or her view of the road.

In another preferable embodiment of the invention, the control means adapted to direct the operation of the system comprises a microphone to pick up verbal commands from the user, and means, including voice recognition software, to transform said verbal commands into a form suitable for controlling the computer and the software programs thereon.

In this case, the microphone may be mounted on a headset, to be worn by the user, giving benefits in the clarity of the verbal messages received, and in being "hands-free". There is provided the option of supplying earphones, attached to the head set, as an alternative to transmitting audible output from the system over the conventional audio speaker system fitted to the vehicle.

Alternatively or additionally, the control means may comprise a conventional keyboard, optionally plugged into a suitable socket provided, integral to the fascia of the vehicle, or folding out of the fascia, for example on the reverse of the cover of a storage compartment (or "glove box").

The wireless telephony means may comprise a conventional mobile telephone handset, fitted removably into a socket adapted to connect it into the system.

Software programs may be provided to permit full operation of the mobile telephone's facilities via the system, without the user having to resort to manual operation, giving a true "hands off' mobile telephone system and a great boon to road safety.

It is preferred for the portable computing system to hold most, preferably all, of the software programs and data for the operation of the system. This gives the benefit of compatibility between system components which may not be designed to operate together, and also provides a measure of security in that the system will not work when the user removes the portable computing means for security or for use elsewhere.

Connection to the vehicle's electrical system obviates the problem of the limited storage capacity of the power source of a conventional portable computer. It would be a further advantage for the docking station to comprise means to recharge the power source of the portable computer while it is connected to the system.

According to a second aspect of the present invention, there is provided, in combination, a vehicle and a system as described above.

Embodiments of the invention will now be more particularly described, by way of example, and with reference to the accompanying drawings, wherein:

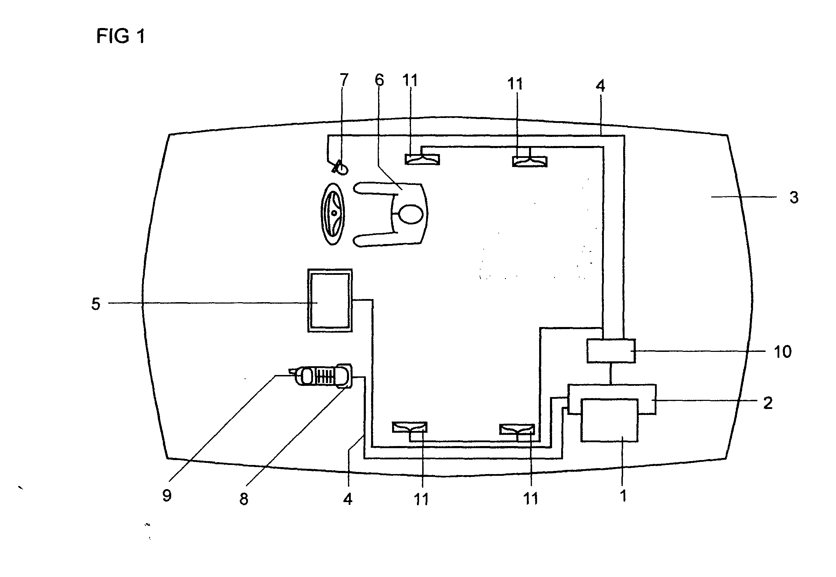

**Figure 1** shows a schematic diagram of the main components of the system, mounted in a vehicle.

Referring now to Figure 1, a vehicle mounted information management system embodying the invention comprises a portable computer 1, connected removably to a docking station 2, here concealed in the boot 3 of the vehicle. The docking station is connected via electrical wiring 4 to the other components of the system, including a display screen 5, here mounted to the dashboard or fascia so as to be viewable at least by the driver 6 of the vehicle. A microphone 7 is positioned so as to be able to pick up verbal commands from the driver 6, and transmit them to the portable computer 1 via the docking station 2. A socket 8 is provided, also connected to the portable computer 1, via the docking station 2, adapted for removable connection of a mobile telephone handset 9. An amplifying means 10, is provided to improve the volume and quality of audible output from the portable computer 1, which output is transmitted to conventional audio speakers 11 built into the vehicle. Connections may also be provided to link further facilities to the system, examples of which will be described below.

A wide range of conventional software programs may be advantageously employed on the portable computer, for example to allow the driver to plan his or her route, and to consult his or her diary or scheduling program. Electronic mail, facsimile and Internet browser programs may be used to pick up messages and information while in transit, as well as useful information such as traffic reports. The full range of mobile telephone services will be available, with the additional capability of displaying mobile telephone text messages on the larger and more legible display screen 5, instead of on the restricted screen present in such mobile telephones as are compatible with text message services. The computer-moderated control of the mobile telephone that is provided, permits the use of the far larger memory of the portable computer to store telephone numbers, in place of the limited memory built into the mobile telephone handset.

A further benefit which may advantageously be derived from the present invention is the replacement or supplementing of a conventional CD-based vehicle audio system with the portable computer.

Software packages now have the facility to play music from data files (for example, in the data formats referred to as "MPEG" or "MP3"). The quality of sound reproduction from these files approaches that from conventional audio impact discs, while the size of the data files required is so small, and the amount of data storage available on typical portable computers is so great, that useful amounts of "music" may be stored without inconvenience to the other operations of the computer. The portable computer embodied in the present invention, optionally employing an amplifier to further improve the volume and quality of the sound output, could replace or supplement the conventional compact disc or magnetic tapebased audio system of the vehicle.

Another advantageous embodiment of the invention additionally comprises a GPS (Global Positioning Satellite) unit, such as is frequently employed as an aid to vehicle navigation, connected to the portable computer 1 by means of the docking station 2. This would constitute one of the optional further facilities which may be connected to the system. It is known that GPS data may be taken into account by route planning software to aid its operations. The ability to integrate this data and plan routes in "real-time" is a further benefit of the present invention.

In the majority of the embodiments of this invention, the components are connected by conventional electrical wiring. However, it may be of benefit to replace some links with infrared links, such as are increasingly being fitted to portable computers and other electronic equipment for short range, flexible data connections.

In an optional further embodiment of the present invention, the display and control means may be combined by the employment of a touch screen device, whereby a user may issue commands by touching appropriate parts of the screen, which is adapted to sense the position of the user's fingers and send signals to the computer appropriately.

In another optional further embodiment, the vehicle-mounted information management system could additionally be connected to such in-car computing means as are currently available, such as are known as "trip computers", giving data such as estimated fuel consumption and range possible with remaining fuel, which could usefully be displayed on the superior display screens of the present invention, and could usefully be integrated into a route planning process.

While the present invention has largely been described in terms of a portable computer in a docking station concealed in the boot of a vehicle, and a display screen and a microphone situated for the benefit of the driver of the vehicle, it will be appreciated that it is not necessarily limited thereto, and the option of further monitors and/or microphones situated for the convenience of passengers in the vehicle, or further or alternative docking stations, is not excluded.

As may be seen, the present invention provides an effective and powerful vehicle-mounted information management system, integrating a conventional portable computing means with control, display and communication means, appropriately adapted and built into a vehicle, to permit a user to carry out a wide range of functions important for business and travel while present in his or her vehicle and isolated from conventional office facilities.

## Claims

1. A vehicle-mounted information management system **characterised in that** it comprises a portable computing means (1) adapted to direct the operation of the system, wireless telephony means (9), display means (5) adapted to communicate information to occupants of the vehicle, means (7) to input commands to the system, means (2) to secure said computing means (1) detachably to the vehicle at a location therein remote from occupants of the vehicle, and connection means to enable supply of electrical power from the existing electrical system of the vehicle.

2. A system as claimed in claim 1, **characterised in that** the means (2) to secure said computing means (1) detachably to the vehicle is located in a boot (3) of the vehicle.

3. A system as claimed in either claim 1 or claim 2, **characterised in that** the portable computing means (1) is a conventional portable, "lap-top" or "notebook" computer.

4. A system as claimed in any one of the preceding claims, **characterised in that** the means (2) to secure the portable computing means to the vehicle is a docking station physically adapted to fit into and be attached to the vehicle.

5. A system as claimed in any one of the preceding claims, **characterised in that** the display means adapted to communicate information with occupants of the vehicle comprises a display screen (5), advantageously mounted in or near the centre of the front fascia of the vehicle.

6. A system as claimed in any one of the preceding claims, **characterised in that** said display means comprises audible messages, optionally transmitted over a conventional audio speaker system (11) fitted to the vehicle.

7. A system as claimed in any one of the preceding claims, **characterised in that** the input means comprises a microphone (7) to pick up verbal commands from the user, and means, including voice recognition software, to transform said verbal commands into a form suitable for input to the computing means.

8. A system as claimed in claim 7, **characterised in that** the microphone (7) is mounted on a headset, to be worn by the user.

9. A system as claimed in any one of the preceding claims, **characterised in that** the input means comprises a touch screen device.

10. A system as claimed in any one of the preceding claims, **characterised in that** the wireless telephony means comprises a conventional mobile telephone handset (9), fitted removably into a socket (8).
